# EUROPÄISCHE PATENTSCHRIFT

(11) **EP 2 361 810 B1**
(45) Veröffentlichungstag und Bekanntmachung des Hinweises auf die Patenterteilung: **12.03.2014**
(21) Anmeldenummer: 11000473.6
(22) Anmeldetag: 21.01.2011
(51) Int. Cl.: B60R 21/0134, G08G 1/16

(54) **Verfahren zum Bestimmen einer Schwere eines Zusammenstosses eines Kraftfahrzeugs mit einem Objekt**
Method for determining the severity of an impact of a motor vehicle with an object
Procédé de détermination de la gravité d'une collision d'un véhicule automobile avec un objet

(30) Priorität: 27.02.2010 DE 102010009667
(43) Veröffentlichungstag der Anmeldung: 31.08.2011
(73) Patentinhaber: Audi AG, 85045 Ingolstadt (DE)
(72) Erfinder: Larice, Markus, 85123 Karskron (DE); Dirndorfer, Tobias, 80799 München (DE)
(74) Vertreter: Thielmann, Frank

(56) Entgegenhaltungen:
- EP-A1- 0 882 624
- EP-B1- 1 068 107
- DE-A1- 10 234 624
- DE-A1-102006 002 746
- DE-B3-102009 012 407
- DE-B4- 10 065 518
- US-A1- 2006 106 538

## Beschreibung

Die Erfindung betrifft ein Verfahren zum Bestimmen einer Schwere eines Zusammenstoßes eines Kraftfahrzeugs mit einem Objekt. Die Erfindung betrifft außerdem ein Verfahren zum Auslösen wenigstens eines Rückhaltemittels eines Kraftfahrzeugs bei einem Zusammenstoß sowie ein Kraftfahrzeug mit einem Kraftfahrzeuginsassenschutzsystem.

Heutzutage werden Fahrzeuge üblicherweise mit Rückhaltesystemen für Fahrzeuginsassen ausgestattet, welche die Aufgabe haben, die Fahrzeuginsassen möglichst sanft abzubremsen. In der Regel wird hierfür das Einsetzen eines Zusammenstoßes erkannt, indem Beschleunigungssensordaten im Fahrzeug ausgewertet werden, welche eine messbare Einwirkung der äußeren Kräfte auf das Fahrzeug nach dem Einsetzen des Zusammenstoßes ausdrücken.

In Abhängigkeit von den gemessenen Daten wird dann üblicherweise eine Schwere des Zusammenstoßes bestimmt. In Abhängigkeit von der so bestimmten Schwere wird dann eine Entscheidung darüber getroffen, ob ein Rückhaltemittel ausgelöst werden soll oder nicht.

Es ist nachteilig, dass bei derartigen Verfahren die Beschleunigungsdaten zum Erkennen des Zusammenstoßes in sehr kurzer Zeit ausgewertet werden müssen, um rechtzeitig die Schwere des Zusammenstoßes bestimmen und gegebenenfalls ein Rückhaltemittel auslösen zu können. Es kommt deshalb oft zu Fehlauslösungen von Rückhaltemitteln. Des Weiteren sind die bekannten Fahrzeuginsassenschutzsysteme sehr kostspielig in ihrer Anwendung und in ihrer Entwicklung: Da nur wenig Zeit zur Verfügung steht, um nach dem Einsetzen des Zusammenstoßes die Schwere des Zusammenstoßes zu bestimmen, basieren viele der zum Bestimmen der Schwere des Zusammenstoßes verwendeten Algorithmen auf den Ergebnissen zuvor durchgeführter Crashversuche mit den jeweiligen spezifischen Fahrzeugstrukturen.

Dies bedingt, dass bereits bei geringfügigen Änderungen der Fahrzeugstruktur erneut Crashversuche notwendig werden, um das Fahrzeuginsassenschutzsystem anpassen zu können.

Die DE 100 65 518 B4 beschreibt ein Verfahren zum Auslösen von Rückhaltemitteln in einem Kraftfahrzeug, bei welchem mit Hilfe einer Precrash-Sensorik schon vor dem Aufprall die Aufprallgeschwindigkeit und der Aufprallzeitpunkt ermittelt werden. Die Aufprallsituation wird dann anhand der Aufprallgeschwindigkeit klassifiziert.

Allerdings kann durch dieses Verfahren der Zeitpunkt, zu dem eine Entscheidung über das Auslösen wenigstens eines Rückhaltemittels getroffen wird, nur geringfügig nach vorne verlagert werden. Es wird dort lediglich ein Auslösezeitfenster bestimmt, in welchem nach Einsetzen des Zusammenstoßes die Beschleunigungssensordaten im Fahrzeug aufgezeichnet und ausgewertet werden, welche zum Auslösen des Rückhaltemittels nach dem Einsetzen des Zusammenstoßes notwendig sind.

Aus der DE 10 2006 002 746 A1 ist eine Vorrichtung und ein Verfahren zur Ansteuerung von Personenschutzmitteln eines Kraftfahrzeugs bekannt. Hierbei wird die Geschwindigkeit bzw. die Beschleunigung des Kraftfahrzeugs aus den Daten von Umfeldsensoren und Aufprallsensoren bestimmt. Diese Größen werden zur Anpassung eines Schwellwerts genutzt, der zur Ansteuerung der Personenschutzmittel herangezogen wird.

Die EP 0 882 624 A1 beschreibt ein Kraftfahrzeug nach dem Oberbegriff des Anspruchs 1 mit einer bedarfsgerechten Steuerung von Insassen-Sicherheitseinrichtungen. Hierbei wird die zu erwartende Bewegung eines Fahrgastes aufgrund des zu erwartenden Beschleunigungsverhaltens des Fahrzeugs während des Unfalls und aufgrund der aktuellen fahrgastindividuellen Parameter bestimmt.

Es wäre wünschenswert, könnte die Entscheidung zum Auslösen von Rückhaltemitteln zu einem früheren Zeitpunkt und mit geringerer Fehlerwahrscheinlichkeit ausgelöst werden.

Die Aufgabe der vorliegenden Erfindung ist es, ein Kraftfahrzeug mit Mitteln zum Bestimmen einer Schwere eines Zusammenstoßes mit einem Objekt bereitzustellen, wobei das Auslösen wenigstens eines Rückhaltemittels früher und zuverlässiger stattfinden kann und die Entwicklungskosten für Kraftfahrzeuginsassenschutzsysteme verringert werden.

Es ist außerdem Aufgabe der vorliegenden Erfindung, ein Fahrzeug mit einem Kraftfahrzeuginsassenschutzsystem bereitzustellen, welches kostengünstig herstellbar ist.

Diese Aufgaben werden durch ein Kraftfahrzeug gemäß dem Patentanspruch 1 gelöst.

Es ist Erkenntnis der vorliegenden Erfindung, dass eine Schwere eines Zusammenstoßes besser und schneller bestimmbar ist und somit Rückhaltemittel zuverlässiger auslösbar sind, wenn bereits vor dem Einsetzen des Zusammenstoßes vorhergesagte Daten für den gesamten Verlauf des Zusammenstoßes bis zu seinem Ende zum Ermitteln der Schwere des Zusammenstoßes genutzt werden.

Da bereits vor dem Einsetzen des Zusammenstoßes wenigstens eine Größe für die Zeit nach Einsetzen des Zusammenstoßes vorhergesagt wird, kann die Schwere des unvermeidbaren Zusammenstoßes des Kraftfahrzeugs mit dem Objekt schon vor dem Einsetzen des Zusammenstoßes genau klassifiziert werden. Kennt man einmal die derart bestimmte Schwere des Zusammenstoßes, so kann wenigstens ein Rückhaltemittel des Kraftfahrzeugs in Abhängigkeit von der bestimmten Schwere des Zusammenstoßes ausgelöst werden. Es kann also bereits vor dem Einsetzen des Zusammenstoßes ausgelöst werden, wodurch sich die Sicherheit des Fahrzeuginsassen vergrößert. Wegen des Zeitgewinns können für das Fahrzeug, beispielsweise für den Längsträger, oder für einzelne Komponenten von Rückhaltemitteln, wie beispielsweise Gasgeneratoren oder Gehäusen, beispielsweise leichtere Materialien verwendet und/oder dünnere Wandstärken eingesetzt werden. Dadurch kommt es zusätzlich zur größeren Sicherheit der Fahrzeuginsassen zu einer Gewichtsreduktion des Fahrzeugs und geringeren Herstellungskosten.

Auf Einsatz von Sensoren wie beispielsweise Beschleunigungssensoren, Drucksensoren oder Körperschallsensoren kann zum Teil oder sogar ganz verzichtet werden. Hierdurch sind deutliche Kosteneinsparungen möglich.

Durch die Erfindung kann bereits vor dem Einsetzen des Zusammenstoßes eine zuverlässige, durch fortlaufendes Empfangen und Berechnen von Daten mit fortlaufender Zeit immer genauer werdende Vorhersage über einen Verlauf des Zusammenstoßes getroffen werden, so dass die Schwere des unvermeidbaren Zusammenstoßes sehr exakt vorhergesagt werden kann.

Zum Vorhersagen der wenigstens einen Größe werden nach dem Einsetzen des Zusammenstoßes wenigstens eine Berechnung auf einer Datenverarbeitungseinheit durchgeführt, welche sich außerhalb des Kraftfahrzeugs befindet. Sobald die Unvermeidbarkeit eines Zusammenstoßes des Kraftfahrzeugs festgestellt wird, können die ermittelten Daten an eine zentrale Datenverarbeitungseinheit übermittelt werden. Auf dieser findet dann die Simulation des Zusammenstoßes statt, deren Ergebnisse wiederum an die Datenverarbeitungseinheit des Kraftfahrzeugs gesendet werden. Durch die Verlagerung von Berechnungen zum Vorhersagen des Zusammenstoßes auf externe Datenverarbeitungseinheiten kann zusätzlich Zeit eingespart werden.

Zur Angabe der Schwere des Zusammenstoßes kann beispielsweise ein Kennwert oder auch ein Verlauf bestimmt werden.

Vorteilhafterweise geben die vorhergesagten Größen einen zeitlichen Verlauf einer Geschwindigkeit an. So kann beispielsweise einfach die Vorhersage der zusammenstoßbedingten Geschwindigkeitsreduktion zum Berechnen der Schwere des unvermeidbaren Zusammenstoßes genutzt werden. Fahrzeuginsassen sind so bei Mehrfachkollisionen gut durch das Fahrzeuginsassenschutzsystem geschützt. Es ist bereits vor dem Einsetzen des Zusammenstoßes bekannt, wie viel kinetische Energie für einen möglichen Folgeunfall noch vorhanden ist. Dadurch können Rückhaltemittel bei verhältnismäßig leichten Unfällen besser für mögliche Folgeunfälle zurückgehalten werden.

Zum Vorhersagen der Größe nach dem Einsetzen des Zusammenstoßes kann eine Berechnung auf einer Datenverarbeitungseinheit des Kraftfahrzeugs durchgeführt werden. Sind die Ergebnisse rechnergestützter Konstruktionen (CAD) des Kraftfahrzeugs in einem Speicher des Kraftfahrzeugs gespeichert und werden die jeweiligen Daten des Objekts, beispielsweise eines weiteren Kraftfahrzeugs, zu der Datenverarbeitungseinheit des Kraftfahrzeugs übermittelt, so kann in an sich bekannter Weise eine rechnerische Simulation des Zusammenstoßes durchgeführt werden. Da zur Datenübertragung nur wenig Zeit zur Verfügung steht, können vereinfachte Modelldaten verwendet werden. Beispielhaft seien Kennfelder wie z. B. Kraft-Weg-Kennlinien genannt, welche bereits im Vorfeld ermittelbar und im Kraftfahrzeug hinterlegbar sind. Sie stehen dann schnell für eine vereinfachte, aber noch ausreichend genaue rechnerische Simulation des Zusammenstoßes zur Verfügung.

Außerdem können unter Bildung einer Unfalldatenbank bereits Daten auf der externen Datenverarbeitungseinheit gespeichert sein, welche Informationen über vergleichbare reale Unfälle oder auch Crashsimulationen enthalten. Das Nutzen eines derartigen Datenspeichers mit wichtigen Informationen von sehr vielen Unfallkonstellationen kann zu einer noch genaueren Vorhersage der Schwere des Zusammenstoßes des Kraftfahrzeugs führen.

Es ist auch denkbar, dass die vorhergesagte Größe nach dem Einsetzen des Zusammenstoßes mit tatsächlich gemessenen Werten für die Größe verglichen wird. Der für die weitere Zukunft vorhergesagte Verlauf der Größe kann dann in Abhängigkeit vom Ergebnis dieses Vergleichs gegebenenfalls korrigiert werden. Das Auslösen wenigstens eines Rückhaltemittels in Abhängigkeit von der so bestimmten Schwere des Zusammenstoßes kann dann zwar erst nach Einsetzen des Zusammenstoßes durchgeführt werden, erfolgt aber immer noch früher verglichen mit herkömmlichen Auslöseverfahren. Zudem ist durch einen derartigen Vergleich die Vorhersage für die Größe in der weiteren Zukunft noch genauer möglich, und eine Fehlauslösung eines Rückhaltemittels ist besser vermeidbar.

Beim Auslöseverfahren des Rückhaltemittels kann die bestimmte Schwere des Zusammenstoßes auch dazu genutzt werden, eine Änderung einer Sitzposition eines Sitzinsassen in einem Fahrzeugsitz bei dem Zusammenstoß vorherzusagen. Hierzu werden beispielsweise eine Ausgangssitzposition, ein Insassengewicht, eine Insassengröße, ein Insassenalter oder dergleichen erfasst. Es kann beispielsweise auch festgestellt werden, ob der Sitzinsasse durch einen von einem Fahrerassistenzsystem durchgeführten Bremsvorgang überrascht wird, oder ob er selbst einen Bremsvorgang durchführt. Die in Abhängigkeit von der bestimmten Schwere des Zusammenstoßes vorhergesagte Änderung der Sitzposition des Sitzinsassen wird dann beim Auslösen des zumindest einen Rückhaltemittels berücksichtigt.

Ein erfindungsgemäßes Kraftfahrzeug umfasst Mittel zum Prüfen einer aktuellen Verkehrssituation auf das Bevorstehen eines unvermeidbaren Zusammenstoßes des Kraftfahrzeugs mit einem weiteren Objekt, ein Kraftfahrzeuginsassenschutzsystem zum Schützen wenigstens eines Insassen bei dem Zusammenstoß, und

eine Datenverarbeitungseinheit, auf welcher das Vorhersagen der Größe nach Einsetzen des Zusammenstoßes möglich ist. Vorteilhafterweise umfasst das Kraftfahrzeug auch einen Speicher, auf welchem Daten speicherbar sind, welche zum Vorhersagen der wenigstens einen Größe nach Einsetzen des Zusammenstoßes nutzbar sind.

Das Kraftfahrzeug weist bevorzugt auch ein Kommunikationssystem auf, mittels welchem Daten zu einer zentralen Datenverarbeitungseinheit und/oder zu einem weiteren Kraftfahrzeug gesendet bzw. von diesen empfangen werden können, welche Informationen zum Vorhersagen der wenigstens einen Größe nach Einsetzen des Zusammenstoßes enthalten.

Nachfolgend werden bevorzugte Ausführungsformen des erfindungsgemäßen Kraftfahrzeugs unter Bezug auf die Zeichnungen beschrieben, wobei:

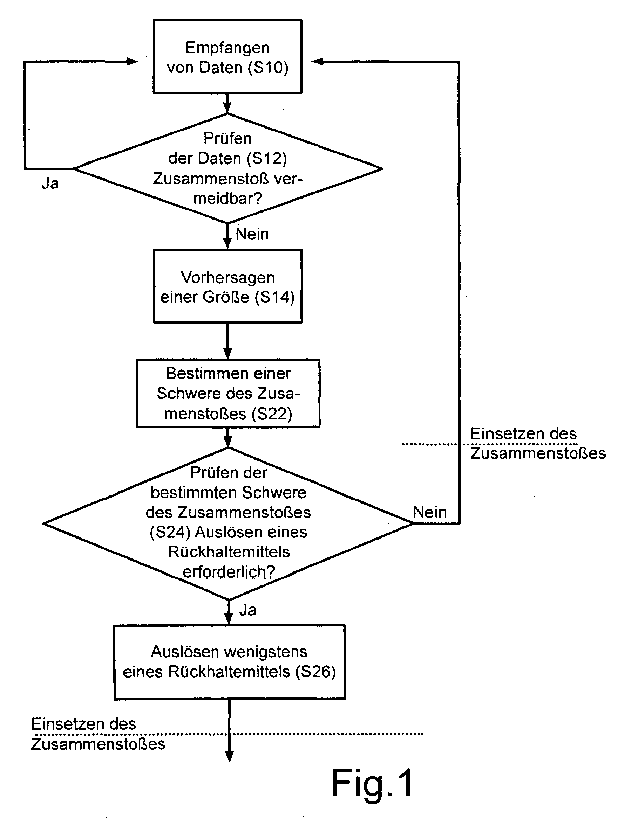

- Fig. 1: eine Schrittfolge veranschaulicht, wie eine Schwere des Zusammenstoßes ermittelt und wie anhand dieser das Auslösen wenigstens eines Rückhaltemittels geprüft und entschieden wird;
- Fig. 2: eine weitere Schrittfolge veranschaulicht, wie die Schwere des Zusammenstoßes bestimmt und wie anhand der Schwere des Zusammenstoßes über das Auslösen oder Nichtauslösen wenigstens eines Rückhaltemittels geprüft und entschieden wird;
- Fig. 3: ein modulares System veranschaulicht, welches beim Auslöseverfahren wenigstens eines Rückhaltemittels nutzbar ist und
- Fig. 4: das modulare System in einer weiteren Ausführungsform zeigt.

Gemäß einem ersten Schritt S10 empfängt ein Kraftfahrzeug ständig Daten, welche Informationen über eine aktuelle Fahrsituation des Kraftfahrzeugs enthalten. Dies geschieht durch Nutzen eines "Pre-Crash"- Sensorsystems, beispielsweise mit vorausschauenden Umfeldsensoren, und Nutzen von optionalen Zusatzinformationen durch ein "Global Positioning System" (GPS), durch eine "Fahrzeug zu Fahrzeug-" beziehungsweise eine "Fahrzeug zu Infrastruktur-" Kommunikation (Car to X) oder durch andere geeignete Kommunikationsmittel. Des Weiteren wird durch weitere Sensoren beispielsweise die Geschwindigkeit des Kraftfahrzeugs gemessen.

Gemäß Schritt S12 wird anhand dieser Daten dann geprüft, ob ein unvermeidbarer Zusammenstoß bevorsteht oder nicht. Wird ein unvermeidbarer Zusammenstoß vorhergesagt, so folgt gemäß Schritt S14 das Vorhersagen wenigstens einer Größe nach dem Einsetzen des Zusammenstoßes. Hierfür wird die Objektklasse bzw. die Objektdimensionen des Objekts, mit welchem der unvermeidbare Zusammenstoß bevorsteht, berücksichtigt. Des Weiteren wird anhand der berechneten Zeit bis zum Einsetzen des Zusammenstoßes, der kinetischen Energie des Kraftfahrzeugs, der kinetischen Energie des Objekts, mit welchem der Zusammenstoß bevorsteht, dem berechneten Winkel des Zusammenstoßes sowie der Überdeckung des Kraftfahrzeugs mit dem Objekt beim Einsetzen des Zusammenstoßes eine rechnerische Simulation des gesamten Verlaufs des Zusammenstoßes durchgeführt. Die aufgeführten Größen sind dabei beispielhaft genannt, es können außerdem auch andere für die Schwere eines Zusammenstoßes bedeutende Größen für die rechnerische Simulation genutzt werden.

Dadurch kann der zeitliche Verlauf der Geschwindigkeit des Kraftfahrzeugs während des gesamten Verlaufs des Zusammenstoßes vorhergesagt werden. Damit ist bereits vor dem Einsetzen des Zusammenstoßes bekannt, zu welchem Zeitpunkt die Geschwindigkeit während des Zusammenstoßes um welchen Subtrahenden reduziert wird. Man kennt also zu jedem Zeitpunkt des bevorstehenden Zusammenstoßes die zu diesem Zeitpunkt jeweils verbleibende kinetische Energie, welche bei einem möglichen Sekundärunfall eine Rolle spielen könnte.

In Abhängigkeit von der derart vorhergesagten Größe wird gemäß Schritt S22 eine Schwere des Zusammenstoßes bestimmt.

Bereits im Voraus wird festgelegt, bei welcher bestimmten Schwere des Zusammenstoßes ein bestimmtes Rückhaltemittel ausgelöst werden muss, und bei welcher bestimmten Schwere das Rückhaltemittel nicht ausgelöst wird. Beispielsweise kann eine bestimmte Schwere des Zusammenstoßes einer Klasse zugeteilt werden, für welche im Voraus festgelegt wird, ob das Bestimmte Rückhaltemittel nach einer erfolgten Zuteilung einer Schwere des Zusammenstoßes zu dieser Klasse ausgelöst werden muss oder nicht. Anhand dieser Vorfestlegung wird in Schritt S24 für die jeweilige bestimmte Schwere des Zusammenstoßes geprüft, ob das Auslösen des jeweiligen Rückhaltemittels erfolgt oder nicht. Im letztgenannten Fall steht das Rückhaltemittel für einen eventuellen Sekundärunfall zur Verfügung. Dies erhöht die Sicherheit des Fahrzeugnutzers, da das Rückhaltemittel nicht unnötig ausgelöst wird. Wird hingegen erkannt, dass die bestimmte Schwere des Zusammenstoßes für ein bestimmtes Rückhaltemittel eine Auslösung erfordert, so wird dieses ausgelöst. Gemäß Schritt S26 kann das Auslösen dabei noch vor dem tatsächlichen Einsetzen des Zusammenstoßes stattfinden.

Anhand von aktuell empfangenen Daten werden die Schritte S12 bis S24 ständig aktualisiert, so dass eine enge Kopplung von vorausschauenden Sicherheitssystemen mit dem Fahrzeuginsassenschutzsystem gegeben ist. Es kann beispielsweise berücksichtigt werden, ob der Fahrer selbst bremst oder ob dies über ein weiteres Fahrerassistenzsystem initiiert und der Fahrer somit von dem Bremseingriff überrascht wurde. Andere Größen, welche beispielsweise mittels weiterer Fahrzeugsysteme erfasst werden, wie die Sitzposition der Fahrzeuginsassen, das Gewicht der Fahrzeuginsassen, die maximalen Gurtrückhaltekraft und das Alter der Fahrzeuginsassen, können ebenso berücksichtigt werden.

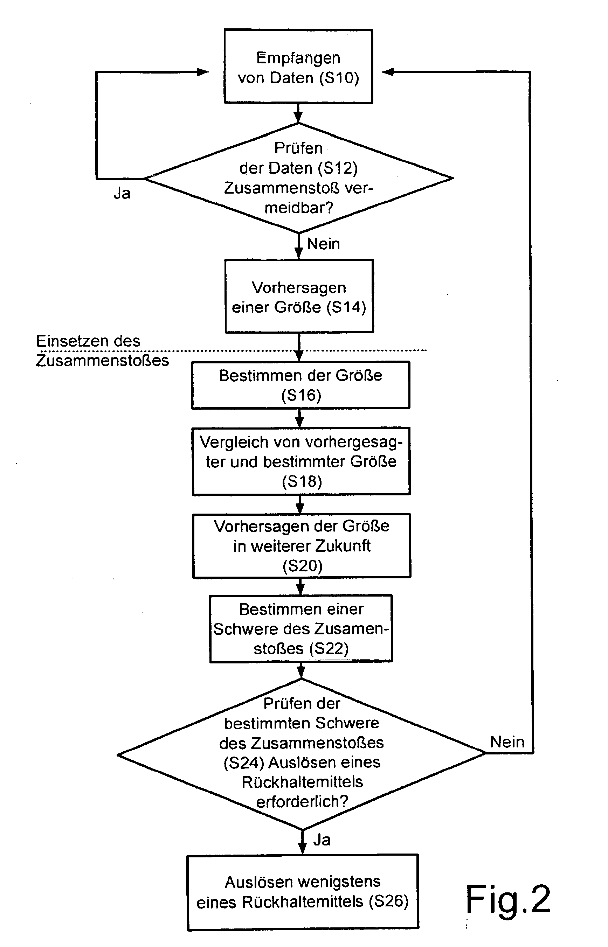

Gemäß einer weiteren Ausführungsform, welche in Fig. 2 veranschaulicht ist, findet nach dem Einsetzen des Zusammenstoßes gemäß Schritt S16 ein Bestimmen der vor dem Einsetzen des Zusammenstoßes in Schritt S14 vorhergesagten Größe statt. Dies geschieht beispielsweise durch herkömmliche Beschleunigungssensoren, Druck- oder Körperschallmessungen oder andere herkömmliche Verfahren. Im Anschluss findet dann ein Vergleich der jeweiligen Werte für die vorhergesagte und für die bestimmte Größe zu einem jeweiligen Zeitpunkt des Zusammenstoßes statt (S18).

In Abhängigkeit des Vergleichs wird die Größe für die weitere Zukunft des Zusammenstoßes noch genauer vorhergesagt (S20). Die Schwere des Zusammenstoßes kann dann noch exakter klassifiziert werden (S22).

Es können alle wichtigen statistischen Größen wie beispielsweise Sitzposition, Insassengewicht und - bei erfolgter Fahreridentifikation - auch das Alter des Fahrers zum Berechnen der Schwere des Zusammenstoßes berücksichtigt werden. So kann eine optimale Schutzfunktion bei einem Zusammenstoß sichergestellt werden.

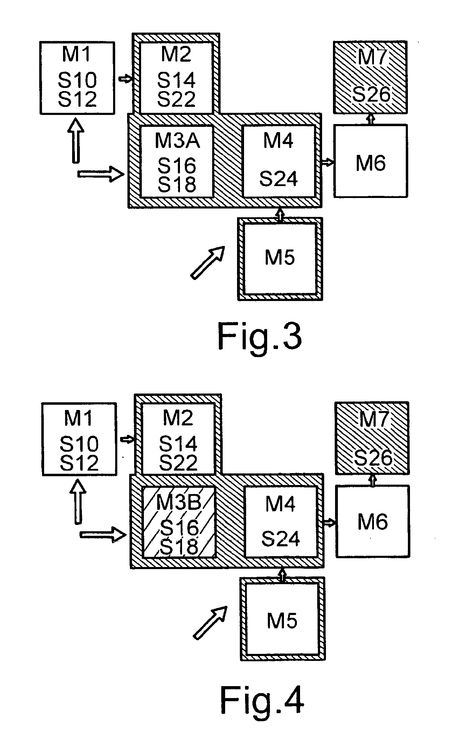

In einem Modulsystem zum Auslösen des Rückhaltemittels (vgl. Figuren 3 und 4) sind einzelne Schritte des Verfahrens zum Auslösen des Rückhaltemittels bestimmten Modulen zugeordnet. Ein jeweiliges Modul des Modulsystems kann dabei sowohl als Hardware, als auch als Software, oder als Hardware und Software gemischt bereitgestellt sein. Beispielsweise kann das Modulsystem sieben einzelne Module (M1-M7) aufweisen, welche durch geeignete Schnittstellen miteinander verbindbar sind. In dem dargestellten Ausführungsbeispiel sind durch ein Modul M1 die Schritte S10 und S12 durchführbar. Mittels eines Moduls M2 können die Schritte S14 und S22, mittels eines Moduls M3A die Schritte S16 und S18, mittels eines Moduls M4 der Schritt S24 und mittels eines Moduls M7 der Schritt S26 durchgeführt werden.

Außerdem ist zusätzlich ein Modul M6 vorgesehen, durch welches gegebenenfalls weitere Daten in das Verfahren zum Auslösen des Rückhaltemittels integrierbar sind. Beispielsweise können durch das Modul M6 herkömmliche Auslöselogarithmen in das Verfahren integriert werden. Es kann also mittels diese Moduls entschieden werden, ob das Rückhaltemittel gemäß den Schritten S10 bis S24, oder aufgrund der weiteren Daten ausgelöst wird. Dies erhöht die Sicherheit der Fahrzeuginsassen, da das Rückhaltemittel beispielsweise bei Ausfall des "Pre-Crash"- Sensorsystems trotzdem zuverlässig ausgelöst werden kann.

Des Weiteren umfasst das Modulsystem ein Modul M5, mittels welchem beispielsweise das Wirken weiterer Fahrerassistenzsysteme während beziehungsweise kurz vor dem Beginn des Zusammenstoßes berücksichtigbar ist. Beispielsweise ist das Bestimmen einer Änderung einer Sitzposition eines Sitzinsassen aufgrund eines für den Sitzinsassen überraschenden Bremsvorgangs eines weiteren Fahrerassistenzsystems diesem Modul zugeordnet.

Es ist möglich, je nach Wunsch eines Anwenders einzelne Module des Modulsystems auszutauschen oder auch neu miteinander zu kombinieren. Beispielsweise ist im in Fig. 4 dargestellten Ausführungsbeispiel das Modul M3A durch das Modul M3B ersetzt. Während mittels des Moduls M3A die Schritte S16 und S18, also das Validieren der zuvor vorhergesagten Größe, beispielsweise durch Messen der zusammenstoßbedingten Geschwindigkeitsreduktion mit anschließendem Vergleich durchgeführt werden, werden mittels des Moduls M3B zur Validierung beispielsweise durch "Fahrzeug-zu-Fahrzeug" bzw. "Fahrzeug-zu-infrastruktur" Kommunikation (Car to X) erhaltene Daten benutzt.

Das Modulsystem kann außerdem durch weitere Schnittstellen weitere Daten empfangen. Rein beispielhaft ist dies durch die Blockpfeile in den Figuren 3 und 4 veranschaulicht, welche auf die Module M1, M3A bzw. M3B und M5 zeigen.

## Patentansprüche

1. Kraftfahrzeug mit einer Datenverarbeitungseinheit, und mit Mitteln zum Prüfen einer aktuellen Verkehrssituation auf das Bevorstehen eines unvermeidbaren Zusammenstoßes des Kraftfahrzeugs mit einem weiteren Objekt, und mit einem Kraftfahrzeuginsassen-Schutzsystem zum Schützen wenigstens eines Insassen bei dem Zusammenstoß, wobei das Kraftfahrzeug
- Mittel zum Empfangen von Daten, welche Informationen über eine aktuelle Fahrsituation des Kraftfahrzeugs enthalten;
- Mittel zum Prüfen anhand der Daten, ob ein unvermeidbarer Zusammenstoß des Kraftfahrzeugs mit wenigstens einem Objekt bevorsteht;
- Mittel zum Vorhersagen wenigstens einer Größe für zumindest einen Zeitpunkt nach Einsetzen des Zusammenstoßes, falls beim Prüfen ein bevorstehender, unvermeidbarer Zusammenstoß festgestellt wird; und
- Mittel zum Bestimmen einer Schwere des unvermeidbaren Zusammenstoßes des Kraftfahrzeugs mit dem Objekt in Abhängigkeit von der vorhergesagten Größe
aufweist,
**dadurch gekennzeichnet, dass**
- die Datenverarbeitungseinheit, welche sich außerhalb des Kraftfahrzeugs befindet, dazu ausgebildet ist, zum Vorhersagen der wenigstens einen Größe nach dem Einsetzen des Zusammenstoßes wenigstens eine Berechnung durchzuführen.

2. Kraftfahrzeug nach Anspruch 1,
**dadurch gekennzeichnet, dass**
mit den Mitteln zum Bestimmen der Schwere des unvermeidbaren Zusammenstoßes ein Kennwert und/oder ein zeitlicher Verlauf des Kennwerts bestimmt wird.

3. Kraftfahrzeug nach Anspruch 1 oder 2,
**dadurch gekennzeichnet, dass**
die zumindest eine vorhergesagte Größe einen zeitlichen Verlauf einer Geschwindigkeit angibt.

4. Kraftfahrzeug nach einem der vorhergehenden Ansprüche,
**dadurch gekennzeichnet, dass**
das Kraftfahrzeug Mittel zum Bestimmen der wenigstens einen vorhergesagten Größe nach dem Einsetzen des Zusammenstoßes, Mittel zum Vergleichen des wenigstens einen bestimmten Werts für die Größe mit einem jeweiligen vorhergesagten Wert für die Größe und Mittel zum Korrigieren der für die weitere Zukunft vorhergesagte Größe in Abhängigkeit vom Ergebnis des Vergleichs aufweist.

5. Kraftfahrzeug nach einem der vorhergehenden Ansprüche,
**dadurch gekennzeichnet, dass**
das Kraftfahrzeug wenigstens ein Rückhaltemittel aufweist, welches bei einem Zusammenstoß des Kraftfahrzeugs mit wenigstens einem weiteren Objekt auslösbar ist, wobei das Kraftfahrzeug dazu ausgebildet ist, die Schwere des Zusammenstoßes zu bestimmen und das zumindest eine Rückhaltemittel in Abhängigkeit von der bestimmten Schwere des Zusammenstoßes auszulösen.

6. Kraftfahrzeug nach Anspruch 5,
**dadurch gekennzeichnet, dass**
das Kraftfahrzeug dazu ausgebildet ist, eine Änderung einer Sitzposition eines Sitzinsassen in einem Fahrzeugsitz vor und während des Zusammenstoßes anhand der bestimmten Schwere vorherzusagen, und die vorhergesagte Änderung der Sitzposition dann beim Auslösen des zumindest einen Rückhaltemittels zu berücksichtigen.

## Claims

1. Motor vehicle comprising a data processing unit and means for checking a current traffic situation for an impending unavoidable collision of the motor vehicle with another object, and comprising a motor vehicle occupant protection system for protecting at least one occupant during the collision, the motor vehicle comprising
- means for receiving data which contain information on a current driving situation of the motor vehicle;
- means for checking, on the basis of the data, whether an unavoidable collision of the motor vehicle with at least one object is impending;
- means for predicting at least one variable for at least one point in time after the start of the collision, if an impending, unavoidable collision has been detected during checking; and
- means for determining a severity of the unavoidable collision of
- the motor vehicle with the object depending on the predicted variable,
**characterised in that**
- the data processing unit, which is positioned outside the motor vehicle, is configured to perform at least one calculation to predict the at least one variable after the start of the collision.

2. Motor vehicle according to claim 1, **characterised in that** a characteristic value and/or a progression of the characteristic value over time is determined using the means for determining the severity of the unavoidable collision.

3. Motor vehicle according to either claim 1 or claim 2, **characterised in that** the at least one predicted variable indicates a progression of a speed over time.

4. Motor vehicle according to any of the preceding claims, **characterised in that** the motor vehicle comprises means for determining the at least one predicted variable after the start of the collision, means for comparing the at least one determined value for the variable with a respective predicted value for the variable and means for correcting the variable predicted for the future depending on the result of the comparison.

5. Motor vehicle according to any of the preceding claims, **characterised in that** the motor vehicle comprises at least one restraint means which can be triggered in the event of the motor vehicle colliding with at least one other object, the motor vehicle being configured to determine the severity of the collision and to trigger the at least one restraint means depending on the determined severity of the collision.

6. Motor vehicle according to claim 5, **characterised in that** the motor vehicle is configured to predict a change in a sitting position of an occupant seated in a vehicle seat before and during the collision on the basis of the determined severity, and to then take into account the predicted change in sitting position when triggering the at least one restraint means.

## Revendications

1. Véhicule automobile comportant une unité de traitement de données et des moyens de vérification d'une situation de circulation actuelle pour l'imminence d'une collision inévitable du véhicule automobile avec un autre objet, et un système de protection des passagers du véhicule automobile pour protéger au moins un passager lors de la collision, le véhicule automobile présentant
- des moyens de réception de données qui contiennent des informations sur une situation de conduite actuelle du véhicule automobile ;
- des moyens de vérification de l'imminence d'une collision inévitable du véhicule automobile avec au moins un autre objet à l'aide des données ;
- des moyens de prédiction d'au moins une grandeur pour au moins un moment après le commencement de la collision, si une collision inévitable imminente est constatée lors de la vérification ; et
- des moyens de détermination d'une gravité de la collision inévitable du véhicule automobile avec l'objet en fonction de la grandeur prédite,
**caractérisé en ce que**
- l'unité de traitement de données, qui se trouve à l'extérieur du véhicule automobile, est conçue pour réaliser au moins un calcul pour prédire l'au moins une grandeur après le commencement de la collision.

2. Véhicule automobile selon la revendication 1,
**caractérisé en ce qu'**
avec les moyens de détermination de la gravité de la collision inévitable une caractéristique et/ou une évolution de la caractéristique dans le temps sont déterminées.

3. Véhicule automobile selon la revendication 1 ou 2,
**caractérisé en ce que**
l'au moins une grandeur prédite indique une évolution d'une vitesse dans le temps.

4. Véhicule selon l'une des revendications précédentes,
**caractérisé en ce que**
le véhicule automobile présente des moyens de détermination de l'au moins une grandeur prédite après le commencement de la collision, des moyens de comparaison de l'au moins une valeur déterminée pour la grandeur avec une valeur prédite respective pour la grandeur et des moyens de correction de la grandeur prédite pour la suite des événements en fonction du résultat de la comparaison.

5. Véhicule selon l'une des revendications précédentes,
**caractérisé en ce que**
le véhicule automobile présente au moins un moyen de retenue qui peut être déclenché lors d'une collision du véhicule automobile avec au moins un autre objet, le véhicule automobile étant conçu pour déterminer la gravité de la collision et déclencher l'au moins un moyen de retenue en fonction de la gravité déterminée de la collision.

6. Véhicule automobile selon la revendication 5,
**caractérisé en ce que**
le véhicule automobile est conçu pour prédire une variation d'une position assise d'un passager sur un siège de véhicule avant et pendant la collision à l'aide de la gravité déterminée, et tenir compte de la variation prédite de la position assise lors du déclenchement de l'au moins un moyen de retenue.
